# EUROPEAN PATENT APPLICATION

(11) **EP 4 413 878 A1**
(43) Date of publication of application: **14.08.2024**
(21) Application number: 21959962.8
(22) Date of filing: 08.10.2021
(51) Int. Cl.: A24F 40/40

(54) **FLAVOR INHALER**

(71) Applicant: Japan Tobacco, Inc., Tokyo, 105-6927 (JP)
(72) Inventor: INOUE, Yasunobu, Tokyo 130-8603 (JP); KOMINAMI, Takashi, Tokyo 130-8603 (JP); MORITA, Keisuke, Tokyo 130-8603 (JP); FUJINAGA, Ikuo, Tokyo 130-8603 (JP); YAMADA, Manabu, Tokyo 130-8603 (JP)
(74) Representative: Hoffmann Eitle
(86) International application number: PCT/JP2021/037329
(87) International publication number: WO 2023/058220

(57) **Abstract**

This flavor inhaler has a chamber that accommodates a smokable product, a heater for heating the smokable product accommodated in the chamber, and an insulation member that suppresses the dissipation of heat to the smokable product or outside the heater device, the insulation member comprising an aerogel and a first radiation-suppressing material.

## Description

### TECHNICAL FIELD

The present invention relates to a flavor inhaler.

### BACKGROUND ART

To date, a flavor inhaler for inhaling flavor or the like without burning a material is known. The flavor inhaler includes, for example, a chamber that accommodates a flavor generating article and a heater that heats the flavor generating article accommodated in the chamber (see, for example, PTL 1).

### CITATION LIST

### PATENT LITERATURE

PTL 1: International Publication No. 2020/084775

### SUMMARY OF INVENTION

### TECHNICAL PROBLEM

As disclosed in PTL 1, a heat-insulating member including an aerogel or the like may be used in a flavor inhaler in order to improve the efficiency of a heater in heating a flavor generating article. In such a flavor inhaler, when the heating temperature of the flavor generating article is raised in order to increase the amount of an aerosol to be generated, the contribution of radiation to heat transfer from the heater increases. Therefore, it is important to suppress energy loss due to radiation in order to further improve heating efficiency.

An object of the present invention is to suppress energy loss of a flavor inhaler due to radiation.

### SOLUTION TO PROBLEM

According to a first aspect, a flavor inhaler is provided. The flavor inhaler includes: a chamber that accommodates a smokable article; a heater for heating the smokable article accommodated in the chamber; and a heat-insulating member that suppresses dissipation of heat of the smokable article to an outside of a device. The heat-insulating member includes an aerogel and a first radiation-suppressing material.

With the first aspect, since the first radiation-suppressing material can suppress heat radiation from the heater to the outside of the device, it is possible to suppress energy loss due to heat radiation. In particular, in a case where the heating temperature by the heater is high and the contribution of heat radiation to heat transfer is large, it is possible to effectively suppress energy loss. Moreover, since the heat-insulating member includes the aerogel, it is also possible to effectively suppress heat transfer by heat conduction. In general, the aerogel has a weak effect in suppressing heat transfer by heat radiation, whose contribution considerably increases at high temperatures, among forms of heat transfer. Accordingly, by allowing the first radiation-suppressing material and the aerogel to coexist, it is possible to improve the heat insulation performance of the heat-insulating member. The aerogel may include, for example, a porous structure composed of fumed silica, a silica aerogel, a carbon aerogel, or the like.

According to a second aspect, in the first aspect, the first radiation-suppressing material includes at least one selected from the group consisting of a silicon material, a metal oxide, a carbon material, and a metal material.

With the second aspect, the first radiation-suppressing material can have a property of being opaque to electromagnetic waves from infrared to far-infrared. Thus, the first radiation-suppressing material can absorb, reflect, or scatter electromagnetic waves such as infrared rays, far-infrared rays, or the like that are generated from the heater having a high temperature, and it is possible to suppress the outside of the device from being heated by electromagnetic waves.

According to a third aspect, in the first or second aspect, the first radiation-suppressing material includes at least one selected from the group consisting of SiC, TiOz, and hydrophobically-treated carbon.

With the third aspect, since the first radiation-suppressing material can have a low water absorbency, energy consumed for temperature-increase or evaporation of water held by the first radiation-suppressing material is reduced, and thereby decrease of the heat insulation performance of the aerogel or increase of the heat capacity of the entirety of the heat-insulating member is suppressed, and further it is possible to reduce energy loss due to the heat-insulating member. Moreover, with the third aspect, since the first radiation-suppressing material can have electrically insulating property, it is possible to prevent occurrence of a short-circuit if the first radiation-suppressing material falls off from the heat-insulating member and enters the electric controller of the flavor inhaler.

According to a fourth aspect, in any one of the first to third aspects, a volume ratio of the first radiation-suppressing material to the aerogel is 0.001% or greater and 2% or less.

With the fourth aspect, heat conduction and heat radiation can be suppressed in a well-balanced manner.

According to a fifth aspect, in the fourth aspect, the volume ratio of the first radiation-suppressing material to the aerogel is 0.01% or greater and 1% or less.

With the fifth aspect, heat conduction and heat radiation can be suppressed in a well-balanced manner.

According to a sixth aspect, in any one of the first to fifth aspects, the first radiation-suppressing material has a low water absorbency.

With the sixth aspect, it is possible to reduce the amount of moisture held by the first radiation-suppressing material. Accordingly, since decrease of the heat insulation performance of the aerogel or increase of the heat capacity of the entirety of the heat-insulating member is suppressed and, in addition, energy consumed to evaporate moisture held by the first radiation-suppressing material is reduced, it is possible to reduce energy loss due to the heat-insulating member. To be specific, it is preferable that the first radiation-suppressing material have a maximum water absorbency of 4% or less in an environment of 22°C and 60%RH.

According to a seventh aspect, in any one of the first to sixth aspects, the heat-insulating member includes a holding body that holds the aerogel or the first radiation-suppressing material.

With the seventh aspect, since falling-off of the aerogel or the first radiation-suppressing material from the heat-insulating member can be suppressed, it is possible to suppress decrease of the heat insulation performance of the heat-insulating member due to falling-off of the aerogel or the first radiation-suppressing material caused by the use of the flavor inhaler. The holding body may be, for example, a material having hollow spaces therein, such as nonwoven fabric or foam, and, to be specific, may be glass-fiber nonwoven fabric, foam of a heat-resistant resin such as melamine or PI (polyimide), or the like.

According to an eighth aspect, in the seventh aspect, the holding body is a porous body.

With the eighth aspect, since the holding body, which is a porous body, can hold the aerogel or the first radiation-suppressing material in a distributed manner, it is possible to obtain the heat-insulating member in which the aerogel or the first radiation-suppressing material is substantially uniformly distributed in the holding body. Accordingly, it is possible to uniformize the heat insulation performance of the heat-insulating member.

According to a ninth aspect, in the seventh or eighth aspect, the holding body is supported by a support member.

With the ninth aspect, even if the rigidity of the heat-insulating member is low, the heat-insulating member can be stably supported by the support member. The support member is preferably made of a material that can maintain high strength in a high-temperature environment, and may be made of, for example, a resin film, a heat-shrinkable tube, a resin such as PEEK or the like, a metal such as stainless steel or the like, paper, glass, or the like. When the support member has high heat conductivity, since heat transferred to the support member is dispersed, it is possible to reduce local thermal load on the heat-insulating member. On the other hand, when the support member has low heat conductivity (has high heat insulation performance), it is possible to maintain or improve the heat insulation performance of the entire device.

According to a tenth aspect, in the ninth aspect, the support member includes a second radiation-suppressing material.

With the tenth aspect, it is possible to improve the heat insulation performance of the entire device including the support member.

According to an eleventh aspect, in any one of the first to tenth aspects, the heat-insulating member includes a first portion and a second portion that is farther than the first portion from the chamber, and the first portion includes a larger amount of the first radiation-suppressing material than the second portion.

The energy of electromagnetic waves due to heat radiation is proportional to the fourth power of temperature. Therefore, in order to efficiently suppress heat transfer by radiation, it is preferable that electromagnetic waves be absorbed, reflected, or scattered near a heat source (the heater, the smokable article, or the chamber). With the eleventh aspect, since the first portion, which is a part of the heat-insulating member comparatively near the heat source (the chamber) includes a larger amount of the first radiation-suppressing material, heat transfer by radiation can be efficiently suppressed.

According to a twelfth aspect, in any one of the first to eleventh aspects, the heat-insulating member is a heat-insulating sheet that surrounds the chamber.

With the twelfth aspect, since transfer of heat from around the chamber to the outside of the device is suppressed, it is possible to more efficiently heat the smokable article disposed in the chamber. Moreover, by using the heat-insulating member having a sheet-like shape, it is possible to cause the front surface and the back surface of the heat-insulating member having a sheet-like shape respectively to be a first portion (first surface) and a second portion (second surface). Thus, since it is possible to cause the front surface and the back surface of the heat-insulating member having a sheet-like shape to include different amounts of radiation-suppressing material, it is possible to make it easy to manufacture the heat-insulating member including different amounts of the radiation-suppressing material in the first portion and the second portion.

According to a thirteenth aspect, in any one of the first to twelfth aspects, the heater is disposed on an outer circumference of the chamber.

With the thirteenth aspect, since the smokable article is heated by the heater from the outer circumferential side, it becomes easy for the heat of the heater to be transferred to the outer circumferential side. Therefore, as the heat-insulating member suppresses dissipation of heat to the outside of the device, it is possible to maintain heat of the heater further inside of the chamber, that is, on the smokable article side, and it is possible to more efficiently heat the smokable article. Moreover, since the heater is disposed on the outer circumference of the chamber, direct contact of the heater with the smokable article is avoided, and thus soiling of the heater with the smokable article is suppressed.

According to a fourteenth aspect, in any one of the first to thirteenth aspects, the heater is configured to heat the smokable article to 200°C or higher and 400°C or lower.

With the fourteenth aspect, it is possible generate an aerosol by appropriately heating the smokable article while suppressing an effect on the heat-insulating member. If the smokable article is heated to lower than 200°C, a sufficient amount of aerosol may not be generated from the smokable article. If the smokable article is heated to higher than 400°C, the heat-insulating member may be negatively affected, depending on the type of the heat-insulating member and the distance between the heater and the heat-insulating member.

According to a fifteenth aspect, in any one of the first to fourteenth aspects, the heat-insulating member has a first surface, a second surface opposite to the first surface, and an end surface that connects the first surface and the second surface and that has a smaller area than the first surface or the second surface, and at least the end surface of the heat-insulating member is sealed.

With the fifteenth aspect, since it is possible to suppress falling-off of the aerogel or the radiation-suppressing material included in the heat-insulating member, it is possible to suppress decrease of the heat insulation performance of the heat-insulating member due to falling-off of the aerogel or the radiation-suppressing material caused by the use of the flavor inhaler. Moreover, since the end surface of the heat-insulating member is sealed, it is possible to suppress absorption of moisture by the heat-insulating member from the end surface of the heat-insulating member, that is, entry of moisture to the inside of the heat-insulating member having a porous structure. Therefore, it is possible to suppress the energy of the heater from being used to heat moisture included in the heat-insulating member, and, as a result, to suppress decrease of energy efficiency. Furthermore, depending on a material used for sealing, it is possible to maintain the heat-insulating member at a high strength even in a high-temperature environment. The end surface may be sealed with, for example, a shrinkable tube, a tape, an O-ring, an adhesive, a paint, or the like, made of a heat-resistant resin, an inorganic material, or the like.

### BRIEF DESCRIPTION OF DRAWINGS

[Fig. 1A] Fig. 1A is a schematic front view of a flavor inhaler according to the present embodiment.
[Fig. 1B] Fig. 1B is a schematic top view of the flavor inhaler according to the present embodiment.
[Fig. 1C] Fig. 1C is a schematic bottom view of the flavor inhaler according to the present embodiment.
[Fig. 2] Fig. 2 is a schematic side sectional view of a consumable article.
[Fig. 3] Fig. 3 is a sectional view of the flavor inhaler taken along line 3-3 in Fig. 1B.
[Fig. 4] Fig. 4 is a perspective view of a heat-insulating member of a heat insulator.
[Fig. 5] Fig. 5 is a perspective view of a heat insulator disposed around a chamber.
[Fig. 6] Fig. 6 is a schematic sectional view of the heat insulator.

### DESCRIPTION OF EMBODIMENTS

Hereafter, embodiments of the present invention will be described with reference to the drawings. In the drawings described below, the same or corresponding structural elements will be denoted by the same numerals and redundant descriptions thereof will be omitted.

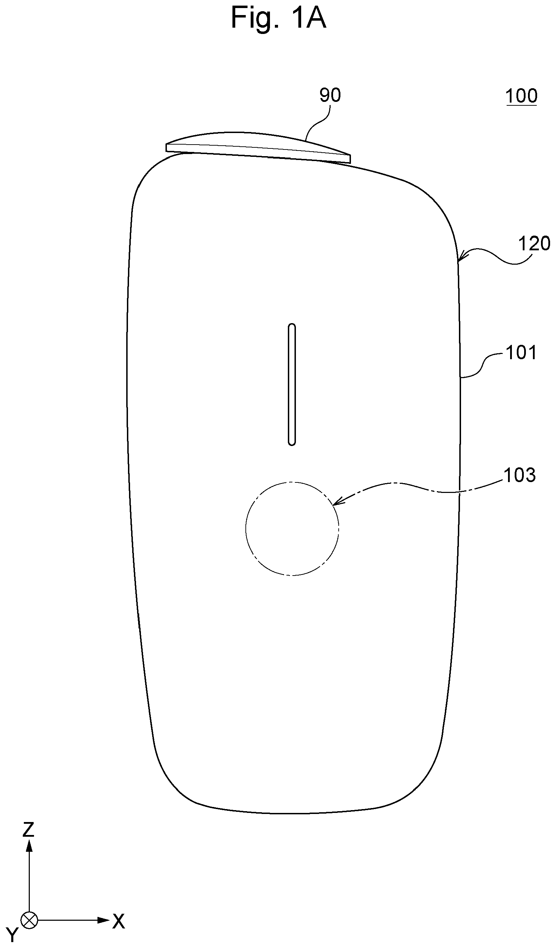

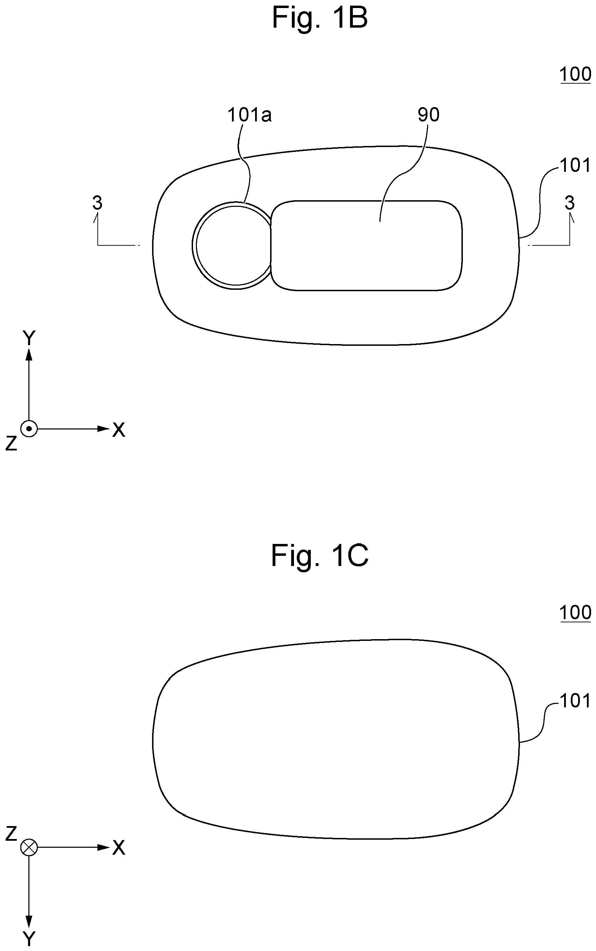

Fig. 1A is a schematic front view of a flavor inhaler 100 according to the present embodiment. Fig. 1B is a schematic top view of the flavor inhaler 100 according to the present embodiment. Fig. 1C is a schematic bottom view of the flavor inhaler 100 according to the present embodiment. For convenience of description, an X-Y-Z orthogonal coordinate system may be added to the figures described in the present description. In the coordinate system, the Z axis is oriented vertically upward, the X-Y plane is disposed so as to cut the flavor inhaler 100 in the horizontal direction, and the Y axis is disposed so as to extend from the front side to the back side of the flavor inhaler 100. The Z axis can be said to be an insertion direction of a consumable article accommodated in a chamber 50 of an atomizer 30 described below, or the axial direction of the chamber 50. The X-axis direction can be said to be a device longitudinal direction in a plane perpendicular to the insertion direction of the consumable article or a direction in which a heater and a power supply are arranged. The Y-axis direction can be said to be a device transversal direction in the plane perpendicular to the insertion direction of the consumable article. A direction parallel to the X-Y plane is a direction perpendicular to the axial direction of the chamber 50, and can be said to be a radial direction. In the present description, a circumferential direction refers to a circumferential direction around the insertion direction of the consumable article or the axial direction of the chamber 50.

The flavor inhaler 100 according to the present embodiment is configured to generate an aerosol including a flavor by heating, for example, a stick-type consumable article having a smokable article including a flavor source and an aerosol source.

As illustrated in Figs. 1A to 1C, the flavor inhaler 100 may be constituted by a slide cover 90 and a body 120. The body 120 has an outer housing 101 and a switch portion 103. The outer housing 101 constitutes the outermost housing of the flavor inhaler 100, and has a size that fits a hand of a user. When using the flavor inhaler 100, a user can hold the body 120 by hand and inhale the aerosol. The outer housing 101 may be configured by assembling a plurality of members.

As illustrated in Fig. 1B, the outer housing 101 has an opening 101a into which a consumable article is inserted. The slide cover 90 is slidably attached to the outer housing 101 so as to close the opening 101a. To be specific, the slide cover 90 is movable along an outer surface of the outer housing 101 between a closed position for closing the opening 101a (the position illustrated in Fig. 1A) and an open position for opening the opening 101a (the position illustrated in Fig. 1B). For example, a user can move the slide cover 90 to the closed position and the open position by manually operating the slide cover 90. Thus, the slide cover 90 can permit or limit access of the consumable article to the inside of the flavor inhaler 100.

The switch portion 103 is used to switch between on and off of the operation of the flavor inhaler 100. For example, when a user operates the switch portion 103 in a state in which the consumable article has been inserted into the flavor inhaler 100, electric power is supplied from a power supply (not shown) to a heater (not shown), and it is possible to heat the consumable article without burning the consumable article. The switch portion 103 may have a switch provided outside of the outer housing 101, or may have a switch positioned inside of the outer housing 101. In a case where the switch is positioned inside of the outer housing 101, when the switch portion 103 on a surface of the outer housing 101 is pressed, the switch is pressed indirectly. In the present embodiment, an example in which the switch of the switch portion 103 is positioned inside of the outer housing 101 will be described.

The flavor inhaler 100 may further have a terminal (not shown). The terminal may be an interface that connects the flavor inhaler 100 with, for example, an external power supply. When a power supply included in the flavor inhaler 100 is a rechargeable battery, it is possible to charge the power supply by connecting an external power supply to the terminal to allow an electric current to flow from the external power supply to the power supply. The flavor inhaler 100 may be configured to be capable of transmitting data related to the operation of the flavor inhaler 100 by connecting a data transmission cable to the terminal.

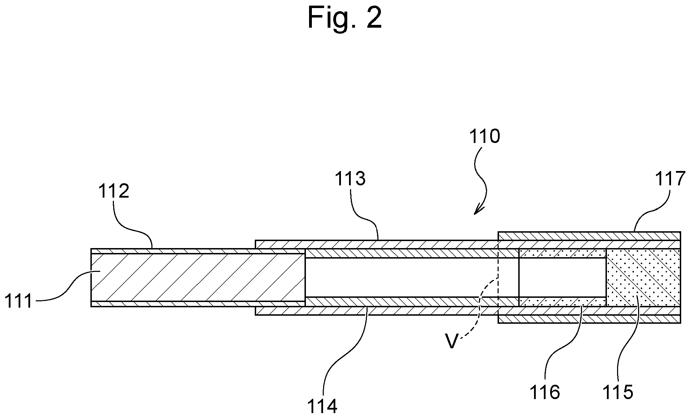

Next, a consumable article used in the flavor inhaler 100 according to the present embodiment will be described. Fig. 2 is a schematic side sectional view of a consumable article 110. In the present embodiment, a smoking system may be constituted by the flavor inhaler 100 and the consumable article 110. In the example illustrated in Fig. 2, the consumable article 110 includes a smokable article 111, a tubular member 114, a hollow filter portion 116, and a filter portion 115. The smokable article 111 is wrapped by first wrapping paper 112. The tubular member 114, the hollow filter portion 116, and the filter portion 115 are wrapped by second wrapping paper 113 that is different from the first wrapping paper 112. The second wrapping paper 113 also wraps a part of the first wrapping paper 112 that wraps the smokable article 111. Thus, the tubular member 114, the hollow filter portion 116, the filter portion 115, and the smokable article 111 are coupled. However, the second wrapping paper 113 may be omitted; and the tubular member 114, the hollow filter portion 116, the filter portion 115, and the smokable article 111 may be coupled by using the first wrapping paper 112. A perforation V may be formed in the tubular member 114 and the second wrapping paper 113 covering the tubular member 114. The perforation V is usually a hole for promoting flow of air from the outside due to inhalation by a user, and the flow of air can lower the temperatures of components and air that flows from the smokable article 111. A lip release agent 117, for allowing a lip of a user to be easily separated from the second wrapping paper 113, is applied to an outer surface of the second wrapping paper 113 in the vicinity of an end portion on the filter portion 115 side. A portion of the consumable article 110 to which the lip release agent 117 is applied functions as an inhalation port of the consumable article 110.

The smokable article 111 may include, for example, a flavor source such as tobacco and an aerosol source. The first wrapping paper 112, which wraps the smokable article 111, may be a sheet member having air-permeability. The tubular member 114 may be a paper tube or a hollow filter. In the example illustrated in the figure, the consumable article 110 includes the smokable article 111, the tubular member 114, the hollow filter portion 116, and the filter portion 115, but the configuration of the consumable article 110 is not limited to this. For example, the hollow filter portion 116 may be omitted, and the tubular member 114 and the filter portion 115 may be disposed adjacent to each other.

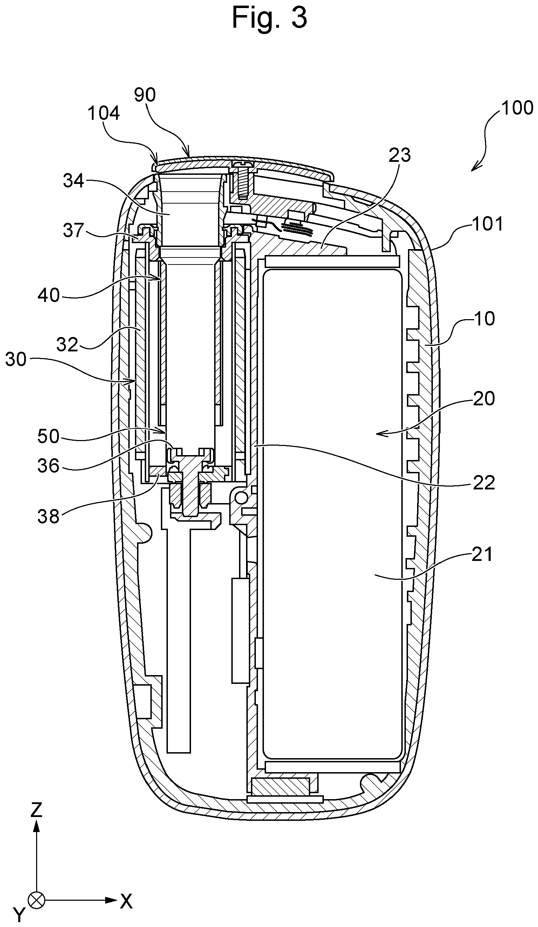

Next, the internal structure of the flavor inhaler 100 will be described. Fig. 3 is a sectional view of the flavor inhaler 100 taken along line 3-3 of Fig. 1B. In Fig. 3, the slide cover 90 is in the closed position. As illustrated in Fig. 3, an inner housing 10 is accommodated inside of the outer housing 101 of the flavor inhaler 100. The inner housing 10 may be made of, for example, a resin, and in particular, may be made of polycarbonate (PC), ABS (Acrylonitrile-Butadiene-Styrene) resin, PEEK (polyetheretherketone), a polymer alloy containing a plurality of types of polymers, or a metal such as aluminum. From the viewpoint of heat resistance and strength, it is preferable that the inner housing 10 be made of PEEK. However, the material of the inner housing 10 is not particularly limited. A power supply unit 20 and the atomizer 30 (corresponding to an example of an atomizing unit) are provided in the internal space of the inner housing 10. The outer housing 101 may be made of, for example, a resin, and in particular, may be made of polycarbonate (PC), ABS (Acrylonitrile-Butadiene-Styrene) resin, PEEK (polyetheretherketone), a polymer alloy containing a plurality of types of polymers, or a metal such as aluminum.

The power supply unit 20 has a power supply 21. The power supply 21 may be, for example, a rechargeable battery or a non-rechargeable battery. The power supply 21 is electrically connected to the atomizer 30 via a PCB (Printed Circuit board) or the like (not shown). Thus, the power supply 21 can supply electric power to the atomizer 30 so that the consumable article 110 is heated appropriately.

As illustrated in the figure, the atomizer 30 includes the chamber 50 that extends in the insertion direction of the consumable article 110 (the Z-axis direction), a heater 40 that surrounds a part of the chamber 50, a heat insulator 32, and an insertion guide member 34 having a substantially tubular shape. The chamber 50 is configured to accommodate the smokable article 111 of the consumable article 110. It is preferable that the chamber 50 be made of a material that has heat resistance and whose thermal expansion coefficient is small. For example, the chamber 50 may be made of a metal such as stainless steel or the like, a resin such as PEEK or the like, glass, ceramics, or the like. As illustrated in the figure, a bottom member 36 may be provided at the bottom of the chamber 50. The bottom member 36 may function as a stopper that positions the consumable article 110 inserted into the chamber 50. The bottom member 36 has recesses and protrusions at a surface that the consumable article 110 contacts, and may define a space that can supply air to the surface that the consumable article 110 contacts. The material of the bottom member 36 may be, for example, a resin material such as PEEK or the like, a metal, glass, ceramic, or the like, but is not particularly limited to any of these. The material of the bottom member 36 may be a material whose heat conductivity is lower than that of the material of the chamber 50. When the bottom member 36 is to be joined to the bottom portion of the chamber 50, it is possible to use an adhesive that may be made of a resin material such as epoxy resin or the like or an inorganic material.

The heater 40 includes a sheet-shaped heater for heating the smokable article 111 of the consumable article 110 accommodated in the chamber 50. The heater 40 is disposed so as to surround the smokable article 111 of the consumable article 110. In the present embodiment, the heater 40 may be disposed so as to surround the chamber 50. To be specific, the heater 40 is configured to be in contact with the outer circumferential surface of the chamber 50 and to heat the consumable article 110 accommodated in the chamber 50. The heater 40 may further include a heat-insulating member positioned outside of the heater 40, a shrinkable tube that fixes the heater 40 to the chamber 50, and the like.

The heater 40 is configured to heat the smokable article 111 of the consumable article 110 accommodated in the chamber 50 from the outside. The heater 40 may be provided on an outer surface of a side wall of the chamber 50 or may be provided on an inner surface of the side wall. In the present embodiment, the heater 40 may be disposed on the outer circumference of the chamber 50. To be specific, the heater 40 may surround the chamber 50 so as to be in contact with the outer circumferential surface of the chamber 50. In this case, since the smokable article 111 is heated by the heater 40 from the outer circumferential side, it become easy for the heat of the heater 40 to be transferred to the outer circumferential side. Therefore, as the heat insulator 32 suppresses dissipation of heat to the outside of the device, it is possible to maintain heat of the heater 40 further inside of the chamber 50, that is, on the smokable article 111 side, and it is possible to more efficiently heat the smokable article 111 disposed in the chamber 50. Moreover, since the heater 40 is disposed on the outer circumference of the chamber 50, direct contact of the heater 40 with the smokable article 111 is avoided, and thus soiling of the heater 40 with the smokable article 111 is suppressed.

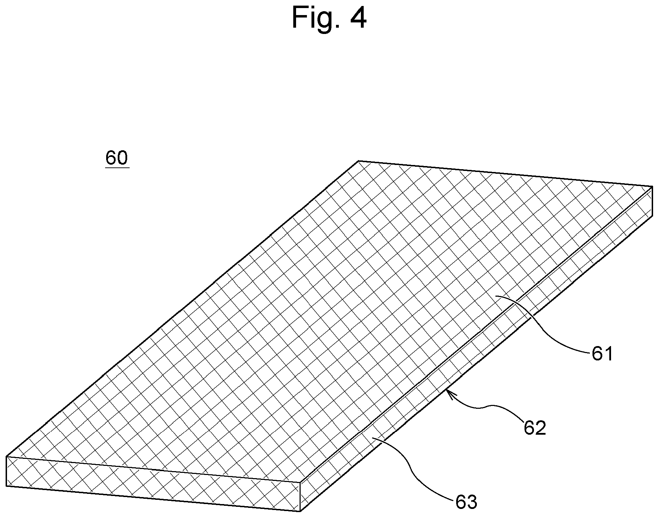

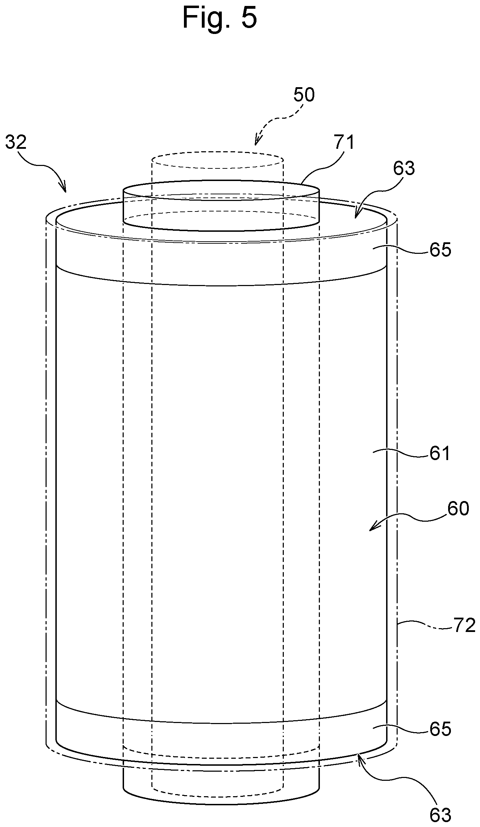

It is preferable that the heater 40 heat the smokable article 111 to 200°C or higher and 400°C or lower. Thus, it is possible generate an aerosol by appropriately heating the smokable article 111 while suppressing an effect on a heat-insulating member 60 described below (see Figs. 4 and 5). If the smokable article 111 is heated to lower than 200°C, a sufficient amount of aerosol may not be generated from the smokable article 111. If the smokable article 111 is heated to higher than 400°C, the heat-insulating member 60 may be negatively affected, depending on the type of the heat-insulating member 60 described below and the distance between the heater 40 and the heat-insulating member 60.

The heat insulator 32 is configured to suppress dissipation of heat of the smokable article 111 or the heater 40 to the outside of the device. The heat insulator 32 is substantially tubular as a whole, and is disposed so as to surround the chamber 50 and the heater 40. The heat insulator 32 may include, for example, an aerogel sheet. The heat insulator 32 is disposed so as to be separated from the chamber 50 and the heater 40, and an air layer is formed between the heat insulator 32, and the chamber 50 and the heater 40. The insertion guide member 34 is made of, for example, a resin material such as PEEK, PC, ABS, or the like, and is provided between the slide cover 90 in the closed position and the chamber 50. The flavor inhaler 100 has a first holder 37 and a second holder 38 for holding the heat insulator 32. The first holder 37 and the second holder 38 may be made of, for example, an elastomer such as silicone rubber or the like. As illustrated in Fig. 3, the first holder 37 holds an end portion of the heat insulator 32 in the positive Z-axis direction. The second holder 38 holds an end portion of the heat insulator 32 in the negative Z-axis direction.

The insertion guide member 34 has a function of guiding insertion of the consumable article 110. To be specific, when the slide cover 90 is in the open position, the insertion guide member 34 communicates with the opening 101a of the flavor inhaler 100 illustrated in Fig. 1B, and guides the consumable article 110 to the chamber 50 as the consumable article 110 is being inserted into the insertion guide member 34. That is, an end portion of the flavor inhaler 100 on a side on which the opening 101a is formed constitutes an insertion-side end portion 104 into which the consumable article 110 including the smokable article 111 is inserted. In the present embodiment, since the insertion guide member 34 may contact the chamber 50, it is preferable that the insertion guide member 34 be made of PEEK from the viewpoint of heat resistance.

The flavor inhaler 100 has a first chassis 22, which extends in the Z-axis direction between the power supply 21 and the atomizer 30, and a second chassis 23, which extends so as to cover the slide cover 90 side of the power supply 21. The first chassis 22 and the second chassis 23 are configured to partition a space in which the power supply 21 is accommodated in the inner housing 10.

Next, the heat insulator 32 will be described in detail. Fig. 4 is a perspective view of a heat-insulating member of the heat insulator 32. The heat-insulating member 60 is configured to suppress dissipation of heat of the heater 40 or the smokable article 111 accommodated in the chamber 50 to the outside of the device. As illustrated in Fig. 4, the heat-insulating member 60 has a first surface 61, a second surface 62, and an end surface 63. The second surface 62 is a surface opposite to the first surface 61. The end surface 63 is a surface that connects the first surface 61 and the second surface 62 and that has a smaller area than the first surface 61 or the second surface 62. In other words, the first surface 61 or the second surface 62 is a main surface of the heat-insulating member 60 having the largest area. As illustrated in Fig. 4, the heat-insulating member 60 may have a sheet-like shape as a whole.

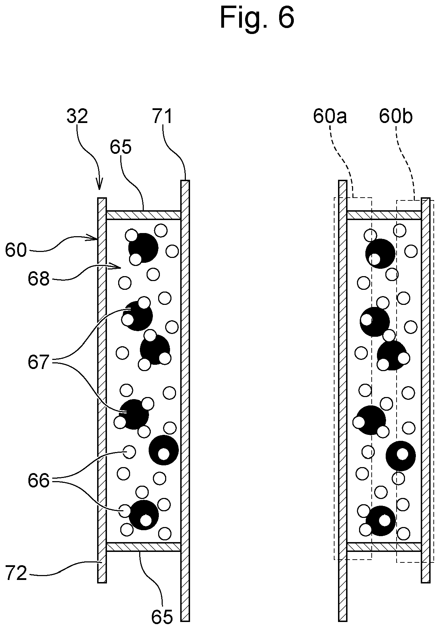

Fig. 5 is a perspective view of the heat insulator 32 disposed around the chamber 50. Fig. 6 is a schematic sectional view of the heat insulator 32. As illustrated in Fig. 5, it is preferable that the heat-insulating member 60 be a heat-insulating sheet that surrounds the chamber 50. Thus, since transfer of heat from around the chamber 50 to the outside of the device is suppressed, it is possible to more efficiently heat the smokable article 111 disposed in the chamber 50. Moreover, by using the heat-insulating member 60 having a sheet-like shape, it is possible to cause the front surface and the back surface of the heat-insulating member 60 having a sheet-like shape respectively to be a first portion 60a (see Fig. 6) and a second portion 60b (see Fig. 6). Thus, since it is possible to cause the front surface and the back surface of the heat-insulating member 60 having a sheet-like shape to include different amounts of a radiation-suppressing material 67 (see Fig. 6), it is possible to make it easy to manufacture the heat-insulating member 60 including different amounts of the radiation-suppressing material 67 in the first portion 60a and the second portion 60b. In the example illustrated in Fig. 5, the heat-insulating member 60 has a substantially tubular shape so that the second surface 62 faces the chamber 50 side, and is disposed so as to surround the chamber 50. That is, in the example illustrated in Fig. 5, the first surface 61 of the heat-insulating member 60 having a tubular shape constitutes an outer circumferential surface.

As illustrated in Fig. 6, the heat-insulating member 60 according to the present embodiment includes an aerogel 66 and the radiation-suppressing material 67 (corresponding to an example of a first radiation-suppressing material). Thus, since the radiation-suppressing material 67 can suppress heat radiation from the heater 40 to the outside of the device, it is possible to suppress energy loss due to heat radiation. In particular, in a case where the heating temperature by the heater 40 is high and the contribution of heat radiation to heat transfer is large, it is possible to effectively suppress energy loss. Moreover, since the heat-insulating member 60 includes the aerogel 66, it is also possible to effectively suppress heat transfer by heat conduction. In general, the aerogel 66 has a weak effect in suppressing heat transfer by heat radiation, whose contribution considerably increases at high temperatures, among forms of heat transfer. Accordingly, by causing the radiation-suppressing material 67 and the aerogel 66 to coexist, it is possible to improve the heat insulation performance of the heat-insulating member 60. The aerogel 66 may include, for example, a porous structure composed of fumed silica, a silica aerogel, a carbon aerogel, or the like.

It is preferable that the radiation-suppressing material 67 have a low water absorbency. To be specific, it is preferable that the radiation-suppressing material 67 have a maximum water absorbency of 4% or less in an environment of22°C and 60%RH. Thus, it is possible to reduce the amount of moisture held by the radiation-suppressing material 67. Accordingly, since decrease of the heat insulation performance of the aerogel 66 or increase of the heat capacity of the entirety of the heat-insulating member 60 is suppressed and, in addition, energy consumed to evaporate the water held by the radiation-suppressing material 67 is reduced, it is possible to reduce energy loss due to the heat-insulating member 60.

It is preferable that the radiation-suppressing material 67 include at least one selected from the group consisting of, for example, a silicon material, a metal oxide, a carbon material, and a metal material. Thus, the radiation-suppressing material 67 can have a property of being opaque (for example, having a transparency of 80% or less) to electromagnetic waves from infrared to far-infrared. Thus, the radiation-suppressing material 67 can absorb, reflect, or scatter electromagnetic waves such as infrared rays, far-infrared rays, or the like that are generated from the heater 40 having a high temperature, and it is possible to suppress the outside of the device from being heated by electromagnetic waves.

It is preferable that the radiation-suppressing material 67 include at least one selected from the group consisting of SiC (silicon carbide), TiOz (titanium oxide), and hydrophobically-treated carbon. Thus, since the radiation-suppressing material 67 has a low water absorbency, energy consumed for temperature-increase or evaporation water held by the radiation-suppressing material 67 is reduced, and thereby decrease of the heat insulation performance of the aerogel 66 or increase of the heat capacity of the entirety of the heat-insulating member 60 is suppressed, and it is possible to reduce energy loss due to the heat-insulating member 60. Moreover, when the radiation-suppressing material 67 is at least one selected from the aforementioned group, since the radiation-suppressing material 67 has electrically insulating property, it is possible to prevent occurrence of a short-circuit if the radiation-suppressing material 67 falls off from the heat-insulating member 60 and enters the electric controller of the flavor inhaler 100.

It is preferable that the volume ratio of the radiation-suppressing material 67 to the aerogel 66 be 0.001% or greater and 2% or less. Thus, heat conduction and heat radiation can be suppressed in a well-balanced manner. It is more preferable that the volume ratio be 0.01% or greater and 1% or less. Thus, heat conduction and heat radiation can be suppressed in a well-balanced manner.

As illustrated in Fig. 6, it is preferable that the heat-insulating member 60 include a holding body 68 that holds the aerogel 66 or the radiation-suppressing material 67. Thus, since falling-off of the aerogel 66 or the radiation-suppressing material 67 from the heat-insulating member 60 can be suppressed, it is possible to suppress decrease of the heat insulation performance of the heat-insulating member 60 due to falling-off of the aerogel 66 or the radiation-suppressing material 67 caused by the use of the flavor inhaler 100. In the present embodiment, the holding body 68 holds both of the aerogel 66 and the radiation-suppressing material 67.

It is preferable that the holding body 68 be a porous body. Thus, since the holding body 68, which is a porous body, can hold the aerogel 66 or the radiation-suppressing material 67 in a distributed manner, it is possible to obtain the heat-insulating member 60 in which the aerogel 66 or the radiation-suppressing material 67 is substantially uniformly distributed in the holding body 68. Accordingly, it is possible to uniformize the heat insulation performance of the heat-insulating member 60. The holding body 68 may be, for example, a material having hollow spaces therein, such as nonwoven fabric or foam, and, to be specific, may be glass-fiber nonwoven fabric, foam of a heat-resistant resin such as melamine or PI (polyimide), or the like.

As illustrated in Figs. 5 and 6, it is preferable that the holding body 68 be supported by a support member. Since the heat-insulating member 60 (the holding body 68) generally has low rigidity and is fragile, the heat-insulating member 60 may be supported by a support member. In this case, even if the rigidity of the heat-insulating member 60 (the holding body 68) is low, the heat-insulating member 60 can be stably supported by the support member. The support member is preferably made of a material that can maintain high strength even in a high-temperature environment, and may be made of, for example, a resin film, a heat-shrinkable tube, a resin such as PEEK or the like, a metal such as stainless steel or the like, paper, glass, or the like. When the support member has high heat conductivity, since heat transferred to the support member is dispersed, it is possible to reduce local thermal load on the heat-insulating member 60. On the other hand, when the support member has low heat conductivity (has high heat insulation performance), it is possible to maintain or improve the heat insulation performance of the entire device.

It is preferable that the first surface 61 or the second surface 62 of the heat-insulating member 60 be sealed with the support member. Thus, since the first surface 61 or the second surface 62 of the heat-insulating member 60 is sealed with the support member, it is possible to suppress entry of moisture to the inside of the heat-insulating member 60 having a porous structure (the holding body 68). Therefore, it is possible to suppress the energy of the heater 40 from being used to heat moisture included in the heat-insulating member 60, and, as a result, to further suppress decrease of energy efficiency.

To be specific, in the example illustrated in Figs. 5 and 6, the inner circumferential surface of the holding body 68 is supported by a support member 71. The support member 71 may be a tubular member that is disposed so as to surround the chamber 50 while being separated from the chamber 50 (see Fig. 5). The support member 71 may be made of, for example, a resin such as PEEK or the like, a metal such as stainless steel or the like, paper, glass, or the like, and may be held by the first holder 37 and the second holder 38 illustrated in Fig. 3. Moreover, the outer circumferential surface of the holding body 68 is supported by a support member 72. The support member 72 may be, for example, a heat-shrinkable tube or a resin film such as a PI film. The support member 72 may have a function of pressing the heat-insulating member 60 against the support member 71. It is preferable that at least one of the support member 71 or the support member 72 include a radiation-suppressing material (corresponding to an example of a second radiation-suppressing material). Thus, it is possible to improve the heat insulation performance of the entire device. This radiation-suppressing material may be made of a material similar to that of the radiation-suppressing material 67. The expression "at least one of the support member 71 or the support member 72 includes a radiation-suppressing material" include the meaning that at least one of the support member 71 or the support member 72 is made of a radiation-suppressing material (for example, stainless steel or the like).

It is preferable that the second surface 62, which constitutes the inner circumferential surface of the heat-insulating member 60 (the holding body 68), be sealed with the support member 71. The second surface 62 of the heat-insulating member 60 can be sealed with the outer circumferential surface of the support member 71. It is preferable that the first surface 61, which constitutes the outer circumferential surface of the heat-insulating member 60 (the holding body 68), be sealed with the support member 72. The support member 72 has a substantially tubular shape, and the first surface 61 of the heat-insulating member 60 can be sealed with the inner circumferential surface of the support member 72.

In the present embodiment, as illustrated in Figs. 5 and 6, it is preferable that the end surface 63 of the heat-insulating member 60 (the holding body 68) be sealed. When at least one of the first surface 61, the second surface 62, or the end surface 63 of the heat-insulating member 60 (the holding body 68) is sealed, it is possible to suppress falling-off of the aerogel 66 or the radiation-suppressing material 67 included in the heat-insulating member 60. Therefore, it is possible to suppress decrease of the heat insulation performance of the heat-insulating member 60 due to falling-off of the aerogel 66 or the radiation-suppressing material 67 caused by the use of the flavor inhaler. Moreover, since at least one of the first surface 61, the second surface 62, or the end surface 63 of the heat-insulating member 60 (the holding body 68) is sealed, it is possible to suppress absorption of moisture by the heat-insulating member 60, that is, entry of moisture to the inside of the heat-insulating member 60 having a porous structure. Therefore, it is possible to suppress the energy of the heater 40 from being used to heat moisture included in the heat-insulating member 60, and, as a result, to suppress decrease of energy efficiency.

It is preferable that the end surface 63 be sealed with a heat-resistant resin 65. Thus, since it is possible to maintain the physical properties of the heat-resistant resin 65 even when the heat-insulating member 60 is exposed to a predetermined high temperature, sealing of the end surface 63 can be maintained when the heat-insulating member 60 is heated by the heater 40. It is preferable that the heat-resistant resin 65 have heat resistance such that the heat-resistant resin 65 can maintain physical properties thereof at temperatures of, for example, 100°C or higher.

It is preferable that the holding body 68 having a porous structure be impregnated with the heat-resistant resin 65 from the end surface 63. As illustrated in Fig. 5, a predetermined region of an end portion the heat-insulating member 60 (the holding body 68) is impregnated with the heat-resistant resin 65 from the end surface 63. Thus, since it is possible to more reliably seal the end surface 63 with the heat-resistant resin 65, it is possible to further suppress falling-off of the aerogel 66 or the radiation-suppressing material 67 and entry of moisture to the inside of the heat-insulating member 60 having a porous structure.

It is preferable that the entire surface of the heat-insulating member 60 (the holding body 68) be sealed. In the example illustrated in Figs. 5 and 6, the entire surface of the heat-insulating member 60 is sealed with the support member 71, the support member 72, and the heat-resistant resin 65. Thus, it is possible to further suppress falling-off of the aerogel 66 or the radiation-suppressing material 67 and entry of moisture to the inside of the heat-insulating member 60 having a porous structure.

As illustrated in Fig. 5, the end surface 63 to be sealed is positioned at an end portion in the insertion direction of the smokable article 111 into the chamber 50. In other words, the end surface 63 of the heat-insulating member 60 in the axial direction of the heat-insulating member 60 having a tubular shape (that is, the end surface 63 extending in the circumferential direction) is sealed. In the example illustrated in the figure, both end surfaces 63 at both end portions of the heat-insulating member 60 in the axial direction are sealed. The end surface 63 of the heat-insulating member 60 in the circumferential direction, that is, the end surface 63 extending in the insertion direction may be sealed with the support member 72.

As illustrated in Fig. 6, the heat-insulating member 60 includes the first portion 60a and the second portion 60b that is farther than the first portion 60a from the chamber 50. As illustrated in the figure, the first portion 60a is a portion that is, for example, near the second surface 62 of the heat-insulating member 60 and that constitutes an inner circumferential surface, and the second portion 60b may be a portion that is, for example, near the first surface 61 of the heat-insulating member 60 and that constitutes the outer circumferential surface. In the present embodiment, it is preferable that the first portion 60a include a larger amount of the radiation-suppressing material 67 than the second portion 60b. To be specific, it is preferable that the weight of the radiation-suppressing material 67 included in a unit volume of the first portion 60a be greater than the weight of the radiation-suppressing material 67 included in a unit volume of the second portion 60b. The energy of electromagnetic waves due to heat radiation is proportional to the fourth power of temperature. Therefore, in order to efficiently suppress heat transfer by radiation, it is preferable that electromagnetic waves be absorbed, reflected, or scattered near a heat source (the heater 40, the smokable article 111, or the chamber 50). Thus, by causing the first portion 60a, which is a part of the heat-insulating member 60 comparatively near the heat source (the chamber 50), to include a larger amount of the radiation-suppressing material 67, heat transfer by radiation can be efficiently suppressed.

Heretofore, embodiments of the present invention have been described. However, the present invention is not limited to the embodiments described above, and can be modified in various ways within the scope of the technical ideas described in the claims, the description, and the drawings. Any shapes and materials that are not directly described in the description and the drawings are within the scope of the technical ideas of the present invention as long as the shapes and materials provide the operations and effects of the present invention.

### REFERENCE SIGNS LIST

- 32: heat insulator
- 40: heater
- 50: chamber
- 60: heat-insulating member
- 60a: first portion
- 60b: second portion
- 61: first surface
- 62: second surface
- 63: end surface
- 66: aerogel
- 67: radiation-suppressing material
- 68: holding body
- 71: support member
- 72: support member
- 100: flavor inhaler
- 111: smokable article

## Claims

1. A flavor inhaler comprising:
a chamber that accommodates a smokable article;
a heater for heating the smokable article accommodated in the chamber; and
a heat-insulating member that suppresses dissipation of heat of the smokable article or the heater to an outside of a device,
wherein the heat-insulating member includes an aerogel and a first radiation-suppressing material.

2. The flavor inhaler according to claim 1,
wherein the first radiation-suppressing material includes at least one selected from the group consisting of a silicon material, a metal oxide, a carbon material, and a metal material.

3. The flavor inhaler according to claim 1 or 2,
wherein the first radiation-suppressing material includes at least one selected from the group consisting of SiC, TiOz, and hydrophobically-treated carbon.

4. The flavor inhaler according to any one of claims 1 to 3,
wherein a volume ratio of the first radiation-suppressing material to the aerogel is 0.001% or greater and 2% or less.

5. The flavor inhaler according to claim 4,
wherein the volume ratio of the first radiation-suppressing material to the aerogel is 0.01% or greater and 1% or less.

6. The flavor inhaler according to any one of claims 1 to 5,
wherein the first radiation-suppressing material has a low water absorbency.

7. The flavor inhaler according to any one of claims 1 to 6,
wherein the heat-insulating member includes a holding body that holds the aerogel or the first radiation-suppressing material.

8. The flavor inhaler according to claim 7,
wherein the holding body is a porous body.

9. The flavor inhaler according to claim 7 or 8,
wherein the holding body is supported by a support member.

10. The flavor inhaler according to claim 9,
wherein the support member includes a second radiation-suppressing material.

11. The flavor inhaler according to any one of claims 1 to 10,
wherein the heat-insulating member includes a first portion and a second portion that is farther than the first portion from the chamber, and
wherein the first portion includes a larger amount of the first radiation-suppressing material than the second portion.

12. The flavor inhaler according to any one of claims 1 to 11,
wherein the heat-insulating member is a heat-insulating sheet that surrounds the chamber.

13. The flavor inhaler according to any one of claims 1 to 12,
wherein the heater is disposed on an outer circumference of the chamber.

14. The flavor inhaler according to any one of claims 1 to 13,
wherein the heater is configured to heat the smokable article to 200°C or higher and 400°C or lower.

15. The flavor inhaler according to any one of claims 1 to 14,
wherein the heat-insulating member has a first surface, a second surface opposite to the first surface, and an end surface that connects the first surface and the second surface and that has a smaller area than the first surface or the second surface, and
wherein at least the end surface of the heat-insulating member is sealed.
